# EUROPÄISCHE PATENTSCHRIFT

(11) **EP 1 340 604 B1**
(45) Veröffentlichungstag und Bekanntmachung des Hinweises auf die Patenterteilung: **31.08.2016**
(21) Anmeldenummer: 03003503.4
(22) Anmeldetag: 15.02.2003
(51) Int. Cl.: B28D 1/14, B23B 51/00

(54) **Bohrwerkzeug**
Drill
Foret

(30) Priorität: 28.02.2002 DE 10208631
(43) Veröffentlichungstag der Anmeldung: 03.09.2003
(73) Patentinhaber: ROBERT BOSCH GMBH, 70442 Stuttgart (DE)
(72) Erfinder: Haussmann, August, 88213 Ravensburg (DE); Moser, Bernhard, 88361 Altshausen (DE); Widmann, Rainer, 88085 Langenargen (DE); Lang, Marco, Dr., 88213 Ravensburg (DE)

(56) Entgegenhaltungen:
- EP-A- 0 452 255
- DE-A1- 10 011 108
- DE-A1- 19 734 094
- DE-A1- 19 944 406
- GB-A- 2 318 072
- US-B1- 6 176 332
- US-B1- 6 260 637

## Beschreibung

Die Erfindung betrifft ein Bohrwerkzeug nach dem Oberbegriff des Anspruchs 1.

Herkömmliche Bohrwerkzeuge und insbesondere Gesteinsbohrer bestehen aus einem Bohrerschaft mit einem Einspannende sowie einem dem Einspannende gegenüberliegenden Bohrerkopf. Der Bohrerkopf ist in Seitenansicht im Wesentlichen durch ein Schneidelement gebildet, welches vorzugsweise als Hartmetallplatte ausgeführt ist und in der Seitenansicht ein giebelförmiges Aussehen aufweist.

Aus der EP 0 452 255 B1 ist ein derartiges Bohrwerkzeug bekannt. Das in den Bohrerschaft eingebettete Schneidelement weist in Wirkrichtung spiegelsymmetrisch zur Werkzeuglängsachse angeordnete Schneidkanten auf, welche durch eine Querschneide verbunden sind. Den Schneidkanten ist jeweils eine Spanfläche und eine Freifläche zugeordnet. Bei einer derartigen Ausführung unterliegen die Schneidkanten und die Querschneide einer hohen Beanspruchung bzw. verschleißen schnell, da die beim Gesteinsbohren, d.h. beim Schlagbohren auftretende Schlagbelastung überwiegend zunächst auf die Schneidkanten bzw. die Querschneide wirkt. Andererseits treten beim Gesteinsbohren bzw. Betonbohren auch Situationen auf, in welchen die Querschneide wenigstens teilweise ins "Leere" schlägt, da das zu bearbeitende amorphe Material durch den vorhergehenden Schlag schon beseitigt ist.

Der Erfindung liegt die Aufgabe zugrunde, ein Bohrwerkzeug und insbesondere eine Schneidplatte für ein Bohrwerkzeug vorzuschlagen, bei welchem eine Optimierung der Form des auf das Gestein einwirkenden Bereichs der Schneidplatte zu einer verbesserten Abtragsleistung und einer Erhöhung der Standfestigkeit bzw. der Schonung der Schneidkanten führt.

Diese Aufgabe wird ausgehend von einem Bohrwerkzeug nach dem Oberbegriff des Anspruchs 1 durch die kennzeichnenden Merkmale des Anspruchs 1 gelöst. In den Unteransprüchen sind vorteilhafte und zweckmäßige Weiterbildungen des im Anspruch 1 beschriebenen Werkzeugs angegeben.

Der Erfindung liegt die Erkenntnis zugrunde, dass die Gesteinsbohrer, welche von der diese antreibenden Maschine sowohl gedreht als auch geschlagen werden, in einzelnen Wirkbereichen zu einseitig auf eine der beiden Belastungsarten - Drehbelastung bzw. Schlagbelastung - optimiert sind. Erfindungsgemäß erfolgt durch die Unterteilung der Spanfläche in wenigstens zwei an einer zweiten Schneidkante ineinander übergehende Schneidflächen eine Optimierung eines Wirkbereichs hinsichtlich der Drehbelastung und der Schlagbelastung. Die bei einer derartigen Schneidplatte ausgebildete zweite Schneidkante ist hinsichtlich des Abschälens bzw. Abdrückens und des Meißelns optimiert und stellt somit eine Symbiose aus den zwei Grundanforderungen an einen Hammerbohrer dar. Die Überlegenheit eines derartig ausgebildeten Bohrwerkzeugs ist darin begründet, dass die in Richtung der Längsmittelachse des Bohrwerkzeugs verlaufende Schlagrichtung und die um die Längsachse des Bohrwerkzeugs orientierte Drehrichtung eine Resultierende aufweisen, welche auf einer schraubenlinienförmigen Bahn etwa in Richtung einer Winkelhalbierenden eines Spitzenwinkels der zweiten Schneidkante orientiert ist. Das heißt, die zweite Schneidkante wirkt im Betrieb wie ein sich auf einer Kreisbahn drehender Meißel, welcher bei der Drehung Material abschält und beim Schlagen in Wirkrichtung der aus Drehrichtung und Schlagrichtung Resultierenden in das zu bearbeitende Material schlägt. Selbstverständlich tragen die an die zweite Schneidkante grenzenden Schneidflächen ebenfalls zum Abtrag bei. Der erfindungsgemäße Bohrer ist hochwirksam, da er seine Meißelwirkung sowohl in die in Längsrichtung des Bohrwerkzeugs verlaufende Schlagrichtung entfaltet als auch eine Meißelwirkung entfaltet, welche die sich aus der Drehrichtung und der Schlagrichtung ergebende Dreh-Schlag-Komponente umsetzt. Da die Schneidplatte nicht als Rotationskörper ausgebildet ist, trifft die Schneidplatte bei ihrer Bewegung auf der schraubenlinienförmigen Bahn ständig auf seitlich liegendes, zu zertrümmerndes Material.

Die Erfindung sieht vor, für die Schneidfläche, welche zwischen der ersten Schneidkante und der zweiten Schneidkante angeordnet ist, einen kleineren Schneidflächenwinkel vorzusehen als für die zweite Schneidfläche, welche zusammen mit der ersten Schneidfläche die zweite Schneidkante bildet. Hierdurch ist eine massive Gestaltung der Schneidplatte im Bereich der ersten Schneidkante möglich und gleichzeitig erlaubt der große Spanflächenwinkel der zweiten Schneidfläche eine insgesamt schlanke, das Eindringen begünstigende Ausführung der Schneidplatte.

Weiterhin sieht die Erfindung vor, die ersten Schneidkanten im Schnittpunkt der Schneidplatte mit der Längsmittelachse des Bohrwerkzeugs bzw. in der Spitze der Schneidplatte direkt ineinander übergehen zu lassen. Hierdurch ist die Ausbildung einer Querschneide vermieden und die ersten Schneidflächen verlaufen bis zur Spitze der Schneidplatte, so dass auch hier eine optimal zur Schneidkante orientierte Schneidfläche zur Verfügung steht.

Die Erfindung sieht vor, das Bohrwerkzeug mit einer Schneidplatte auszustatten. Diese weist vorteilhaft im Bereich der Spitze der Schneidplatte einen zentrischen, in Seitenansicht giebelförmigen ersten Wirkabschnitt und einen gegenüber dem ersten Wirkabschnitt in Wirkrichtung zurückversetzten zweiten Wirkabschnitt auf.

Hierdurch ist es möglich, in der Gestaltung der Schneidplattengeometrie noch stärker auf die sich in radialer Richtung verändernden Belastungen der Schneidplatte Rücksicht zu nehmen und die Orientierung von Kanten und Flächen optimal auf diese Bedingungen auszulegen.

Vorteilhafterweise sieht die Erfindung vor, die Winkelhalbierende des Spitzenwinkels der zweiten Schneidkante etwa in Richtung einer Resultierenden aus der auf das Bohrwerkzeug wirkenden Schlagkomponente und Drehkomponente zu orientieren. Hierdurch ist eine optimale, zusätzliche Meißelwirkung des aus der zweiten Schneidkante und den diese bildenden Schneidflächen entstehenden Zusatzmeißels bewirkt.

Weitere Einzelheiten und Vorteile der Erfindung ergeben sich aus der nachfolgenden Beschreibung von Ausführungsbeispielen der Erfindung, die anhand der Zeichnungen näher erläutert werden.

Es zeigen:
- Fig. 1: eine schematische Seitenansicht eines Bohrwerkzeugs,
- Fig. 2a: eine Draufsicht auf eine erste Schneidplatte,
- Fig. 2b: eine Seitenansicht der in Fig. 2a dargestellten Schneidplatte aus einer Pfeilrichtung IIb,
- Fig. 2c: eine Seitenansicht von rechts der in den Fig. 2a und 2b dargestellten Schneidplatte,
- Fig. 2d: eine perspektivische Ansicht der in den Fig. 2a bis 2c dargestellten Schneidplatte,
- Fig. 3a: eine Draufsicht auf eine zweite Schneidplatte,
- Fig. 3b: eine Seitenansicht der in Fig. 3a dargestellten Schneidplatte aus der Pfeilrichtung IIIb,
- Fig. 3c: eine Seitenansicht von rechts der in den Fig. 3a und 3b dargestellten Schneidplatte,
- Fig. 3d: eine perspektivische Ansicht der in den Fig. 3a bis 3c dargestellten Schneidplatte,
- Fig. 4a: eine Draufsicht auf eine dritte Schneidplatte,
- Fig. 4b: eine Seitenansicht der in Fig. 4a dargestellten Schneidplatte aus der Pfeilrichtung IVb,
- Fig. 4c: eine Seitenansicht von rechts der in den Fig. 4a und 4b dargestellten Schneidplatte und
- Fig. 4d: eine perspektivische Ansicht der in den Fig. 4a bis 4c dargestellten Schneidplatte.

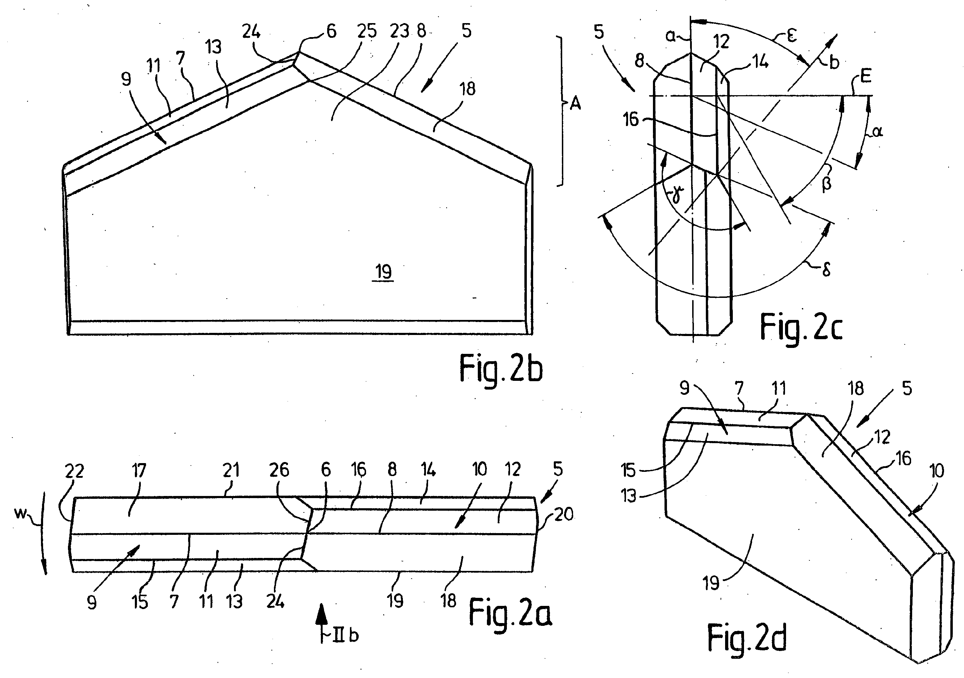

Die in den Figuren 2a bis 4d dargestellten Schneidplatten sind auch als ausschnittsweise Detaildarstellungen einstückiger Werkzeuge zu verstehen.

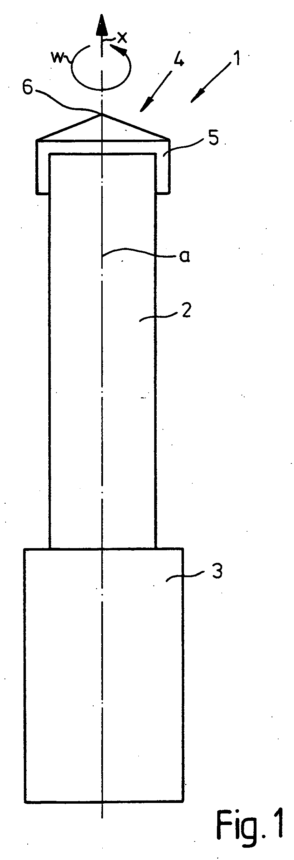

In Fig. 1 ist eine schematische Seitenansicht eines Bohrwerkzeugs 1 dargestellt. Das Bohrwerkzeug 1 besteht im Wesentlichen aus einem Bohrerschaft 2, welcher ein Einspannende 3, das beispielsweise als sogenannter SDS-Plus-Schaft ausgebildet ist, und einem Bohrerkopf 4. Der Bohrerkopf 4 ist durch eine in den Bohrerschaft 2 eingesetzte Schneidplatte 5 gebildet. Das Bohrwerkzeug 1 weist eine Längsmittelachse a auf, welche den Bohrerkopf 4 in einer Spitze 6 schneidet.

In Fig. 2a ist eine Draufsicht auf eine Schneidplatte 5 dargestellt. Die Schneidplatte 5 besitzt zwei Schneidkanten 7, 8, welche in einer Spitze 6 geradlinig ineinander übergehen. In eine Drehrichtung w sind den Schneidkanten 7, 8 Spanflächen 9, 10 zugeordnet, welche sich aus jeweils zwei Schneidflächen 11, 13 bzw. 12, 14 zusammensetzen. Die Schneidflächen 11, 13 bzw. 12, 14 bilden miteinander jeweils eine zweite Schneidkante 15 bzw. 16, welche parallel zur ersten Schneidkante 7 bzw. 8 verläuft. Den Spanflächen 9, 10 ist jeweils eine Freifläche 17, 18 zugeordnet, welche in der Drehrichtung w den Schneidkanten 7, 8 nachläuft. Zu den Seiten hin ist die Schneidplatte 5 durch Seitenflächen 19 bis 22 gebildet, wobei sich die Seitenflächen 19, 21 etwa parallel gegenüberliegen.

In Fig. 2b ist eine Seitenansicht auf die in Fig. 2a dargestellte Schneidplatte 5 aus der Pfeilrichtung IIb abgebildet. In der Seitenansicht bilden die Seitenflächen 19, 21 in einem oberen Bereich A der Schneidplatte 5 begrenzt durch die Schneidflächen 13, 14 bzw. die Freiflächen 17, 18 einen Giebel 23. Die Schneidflächen 11, 13 gehen an einer Übergangskante 24, welche einen winkelförmigen Verlauf aufweist, in die Freifläche 18 über. Die Übergangskante 24 verläuft von einer Spitze 25 des Giebels 23 zur Spitze 6 der Schneidplatte 5. Ebenso gehen die Schneidflächen 12, 14 entlang einer Übergangskante 26 in die Freifläche über, wobei auch die Übergangskante 26 einen winkelförmigen Verlauf aufweist (s. Fig. 2a).

In Fig. 2c ist eine Seitenansicht von rechts der in den Figuren 2a und 2b dargestellten Schneidplatte 5 abgebildet.

Die Schneidflächen 12, 14 bilden zu einer senkrecht zu einer Werkzeuglängsachse a liegenden Ebene E einen Spanflächenwinkel α bzw. β. Hierbei ist der Spanflächenwinkel α der Schneidfläche 12 kleiner als der Spanflächenwinkel β der Schneidfläche 14. Beispielsweise beträgt der Schneidflächenwinkel α etwa 30° und der Schneidflächenwinkel β etwa 60°. Weiterhin weist die erste Schneidkante 8 einen Spitzenwinkel ð und die zweite Schneidkante 16 einen Spitzenwinkel γ auf. Der Spitzenwinkel δ der ersten Schneidkante beträgt etwa 90°. Der Spitzenwinkel γ der zweiten Schneidkante 16 beträgt etwa 140°. Eine Winkelhalbierende b des Spitzenwinkels γ der zweiten Schneidkante 16 verläuft etwa mit einem Winkel von ε = 45° zu der Längsmittelachse a. Dies bedeutet, dass die zweite Schneidkante 16 bzw. auch die in Fig. 2 nicht sichtbare zweite Schneidkante 15, welche punktsymmetrisch zur Schneidkante 16 verläuft, auf einen schräg-schlagenden Angriff auf das zu bearbeitende Gestein ausgerichtet ist.

In Fig. 2d ist eine perspektivische Ansicht der in den Fig. 2a bis 2c dargestellten Schneidplatte 5 abgebildet. Die Schneidplatte 5 besitzt im Bereich der Spanflächen 9, 10 die spezielle Form eines Mansarddachs, wobei die obere, flach geneigte Fläche durch die Schneidfläche 11 bzw. 12 und die untere, steil geneigte Fläche durch die Schneidfläche 13 bzw. 14 gebildet ist. Hierdurch ist die Schneidplatte 5 in der Lage, auch die in das Bohrwerkzeug eingebrachte Drehenergie optimal für die schlagende Abtragung bzw. Zerkleinerung des Gesteins einzusetzen, da die zweiten Schneidkanten 15, 16 auf eine Zerkleinerung des zu den Seitenflächen 19, 21 orientierten Gesteins ausgelegt sind.

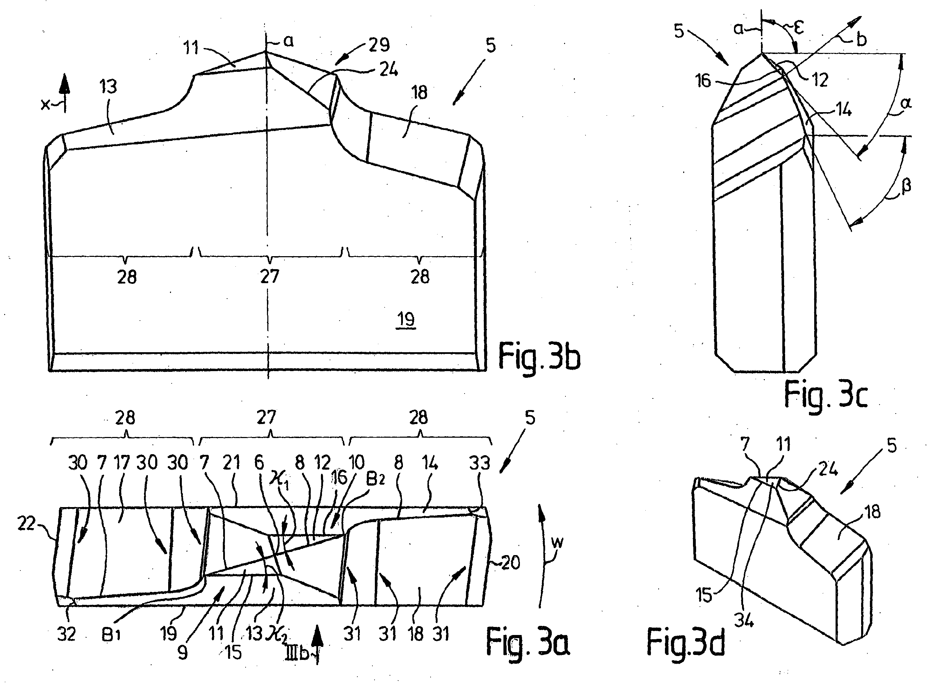

In Fig. 3a ist eine Draufsicht auf eine weitere Schneidplatte 5 dargestellt. Die Schneidplatte 5 besitzt zwei Schneidkanten 7, 8, welche in einer Spitze 6 geradlinig ineinander übergehen. Die Schneidkanten 7, 8 verlaufen, ausgehend von der Spitze 6, zunächst in einem zentrischen Bereich 27 der Schneidplatte 5 und gehen von diesem dann bogenförmig in Außenbereiche 28 der Schneidplatte 5 über. Die Außenbereiche 28 sind in Richtung einer Längsmittelachse a der Schneidplatte 5 gegenüber dem zentrischen Bereich 28 zurückversetzt, so dass die Schneidplatte 5 im zentrischen Bereich eine Nase 29 aufweist (s. auch Fig. 3b). In eine Drehrichtung w sind den Schneidkanten 7, 8 Spanflächen 9, 10 zugeordnet, welche sich aus jeweils zwei Schneidflächen 11, 13 bzw. 12, 14 zusammensetzen. Die Schneidflächen 11, 13 bzw. 12, 14 bilden miteinander jeweils eine zweite Schneidkante 15 bzw. 16. Die zweiten Schneidkanten 15, 16 verlaufen im zentrischen Bereich 27 der Schneidplatte 5 in einem Winkel κ₁ bzw. κ₂ zu den Schneidkanten 7, 8 und vereinigen sich mit diesen mit Schnittpunkten B₁, B₂. Entgegen der Drehrichtung w sind den Schneidkanten 7, 8 Freiflächen 17, 18 zugeordnet, welche vom zentrischen Bereich 27 in die Außenbereiche 28 über mehrere Absätze 30 bzw. 31 verlaufen. In den Außenbereichen 28 weisen die Schneidflächen 13, 14 einen Knick 32, 33 auf. Seitlich ist die Schneidplatte 5 durch Seitenflächen 19 bis 22 begrenzt, wobei die Seitenflächen 19, 21 etwa parallel zueinander verlaufen.

In Fig. 3b ist eine Seitenansicht auf die in Fig. 3a dargestellte Schneidplatte 5 aus der Pfeilrichtung IIIb abgebildet. In eine Wirkrichtung x der Schneidplatte 5 steht deren im zentrischen Bereich 27 liegende Nase 29 gegenüber den Außenbereichen 28 vor. Die Schneidflächen 11, 13 gehen an einer Übergangskante 24, welche den Verlauf eines Polygonzugs aufweist, in die Freifläche 18 über.

Fig. 3c zeigt die in den Fig. 3a und 3b dargestellte Schneidplatte 5 in einer Seitenansicht von rechts. Die Schneidfläche 12 weist einen Spanflächenwinkel α und die Schneidfläche 14 einen Spanflächenwinkel β auf. Der Spanflächenwinkel α beträgt etwa 45° und der Spanflächenwinkel β beträgt etwa 65°. Eine Winkelhalbierende b, welche einen nicht dargestellten Spitzenwinkel der zweiten Schneidkante 16 halbiert, verläuft etwa in einem Winkel ε zu der Längsmittelachse a des Schneidkörpers 5. Hierbei beträgt der Winkel s etwa 45°.

In Fig. 3d ist eine perspektivische Ansicht der in den Figuren 3a bis 3c gezeigten Schneidplatte 5 abgebildet. In dieser Ansicht ist der stufenförmige Verlauf der Freifläche 18 erkennbar. Weiterhin ist zu erkennen, dass die Schneidfläche 11 begrenzt durch die erste Schneidkante 7, die zweite Schneidkante 15 und die Übergangskante 24 ein Dreieck 34 bildet. Die zweite Schneidkante 15 bzw. 16 verläuft bei der in den Figuren 3a bis 3d dargestellten Ausführungsvariante nur im zentrischen Bereich 27, in welchem die Schneidplatte 5 auch den höchsten Schlagbelastungen ausgesetzt ist. In diesem Bereich unterstützt die zweite Schneidkante 15 bzw. 16 die Schneidkanten 7, 8, indem sie eine weitere Kante darstellt, welche Schlag- bzw. Dreh-Schlagenergie auf das zu zerkleinernde Gestein überträgt.

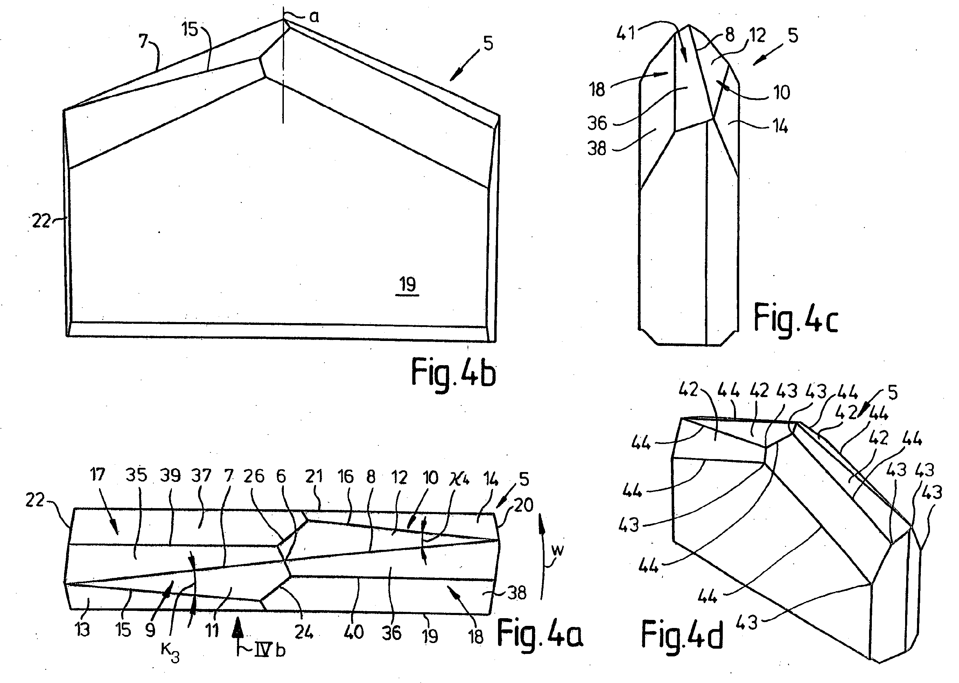

Fig. 4a zeigt eine Draufsicht auf eine weitere Schneidplatte 5. Diese weist Schneidkanten 7, 8 auf, welche in einer Spitze 6 der Schneidplatte 5 geradlinig ineinander übergehen. Den Schneidkanten 7, 8 sind in eine Drehrichtung w Spanflächen 9, 10 zugeordnet. Diese setzen sich ihrerseits aus Schneidflächen 11, 13 bzw. 12, 14 zusammen, welche miteinander zweite Schneidkanten 15 bzw. 16 bilden. Diese zweiten Schneidkanten 15, 16 verlaufen in Draufsicht in Winkeln κ₃, κ₄ zu den ersten Schneidkanten 7, 8. Entgegen der Drehrichtung w gehen die Schneidkanten 7, 8 in Freiflächen 17, 18 über. Diese sind wiederum aus einzelnen Freiflächen 35, 37 bzw. 36, 38 gebildet. Am Übergang der Freifläche 35 in die Freifläche 37 bzw. der Freifläche 36 in die Freifläche 38 sind Kanten 39 bzw. 40 ausgebildet, da die Freiflächen 35 bis 38 in unterschiedlich geneigten Ebenen liegen. Übergangskanten 24 bzw. 26 zwischen den Flächen 11, 13, 36, 38 bzw. 12, 14, 35, 37 sind als Zick-Zack-Linien ausgebildet. Seitenflächen 19 bis 22 begrenzen die Schneidplatte 5 zu den Seiten hin. Hierbei liegen die Seitenflächen 19, 21 etwa parallel zueinander.

In Fig. 4b ist eine Seitenansicht auf die in Fig. 4a dargestellte Schneidplatte 5 aus einer Pfeilrichtung IVb gezeigt. Die zweite Schneidkante 15 bzw. Schlagkante 15 verläuft bis zur Seitenfläche 22 und unterstützt somit die Schneidkante 7 auf annähernd der gesamten Länge.

Fig. 4c zeigt eine Seitenansicht von rechts auf die in den Figuren 4a und 4b dargestellte Schneidplatte 5. Durch die Unterteilung der Freifläche 18 in zwei Freiflächen 36, 38 und die gleichzeitige Unterteilung der Spanfläche 10 in zwei Schneidflächen 12, 14 erhält die Schneidplatte 5 im Bereich der Schneidkante 8 eine massive, sich rasch verbreiternde Meißelform 41.

In Fig. 4d ist eine perspektivische Ansicht der in den Figuren 4a bis 4c dargestellten Schneidplatte gezeigt. Durch das Aufeinandertreffen von insgesamt 8 Flanken 42, welche durch die Schneidfläche 11 bis 14 bzw. die Freiflächen 35 bis 38 gebildet sind, erhält der hauptsächlich auf das zu zerkleinernde Gestein einwirkende Bereich der Schneidplatte 5 eine Vielzahl von Spitzen 43 und Kanten 44, welche alle zu einer massiven Zerkleinerung des zu bearbeitenden Gesteins beitragen.

Die Erfindung ist nicht auf dargestellte oder beschriebene Ausführungsbeispiele beschränkt. Sie umfasst vielmehr Weiterbildung der Erfindung im Rahmen der Schutzrechtsansprüche, insbesondere ist es auch vorgesehen, wenigstens eine Spanfläche und/oder wenigstens eine Freifläche in mehr als zwei Teilflächen zu unterteilen, welche in unterschiedlich geneigten Ebenen zueinander liegen.

**Bezugszeichenliste:**

| | | | |
|---|---|---|---|
| 1 | Bohrwerkzeug | 31 | Absatz |
| 2 | Bohrerschaft | 32 | Knick |
| 3 | Einspannende | 33 | Knick |
| 4 | Bohrerkopf | 34 | Dreieck |
| 5 | Schneidkörper, Schneidplatte | 35-38 | Freifläche |
| | | 39 | Kante |
| 6 | Spitze von (4 bzw. 5) | 40 | Kante |
| 7 | Schneidkante | 41 | Meißelform |
| 8 | Schneidkante | 42 | Flanke |
| 9 | Spanfläche | 43 | Spitze |
| 10 | Spanfläche | 44 | Kante |
| 11 | Schneidfläche von 9 | | |
| 12 | Schneidfläche von 10 | | |
| 13 | Schneidfläche von 9 | | |
| 14 | Schneidfläche von 10 | | |
| 15 | zweite Schneidkante | | |
| 16 | zweite Schneidkante | | |
| 17 | Freifläche | | |
| 18 | Freifläche | | |
| 19-22 | Seitenfläche | | |
| 23 | Giebel | | |
| 24 | Übergangskante | | |
| 25 | Spitze von 23 | | |
| 26 | Übergangskante | | |
| 27 | zentrischer Bereich | | |
| 28 | Außenbereich | | |
| 29 | Nase | | |
| 30 | Absatz | | |

## Patentansprüche

1. Bohrwerkzeug (1) zur Verarbeitung von Beton, Gestein, Mauerwerk und dergleichen Materialien, mit einem Werkzeugkopf mit einem als Schneidplatte (5) ausgebildeten Schneidkörper (5), der wenigstens zwei in Drehrichtung (w) vordere Spanflächen (9, 10), wenigstens zwei in Drehrichtung (w) rückseitige Freiflächen (17, 18) und wenigstens zwei stirnseitige Schneidkanten (7, 8) aufweist, wobei die Schneidkanten (7, 8) in der Spitze (6) der Schneidplatte (5) direkt ineinander übergehen, wobei die Schneidkanten (7, 8) jeweils die Spanfläche (9, 10) und die Freifläche (17, 18) trennen, **dadurch gekennzeichnet, dass** die Spanflächen (9, 10) jeweils durch wenigstens zwei an wenigstens einer zweiten Schneidkante (15, 16) ineinander übergehende Schneidflächen (11, 13; 12, 14) gebildet sind, wobei jeweils die obere, an der ersten Schneidkante (7, 8) in die Freifläche (17, 18) übergehende Schneidfläche (11, 12) einen Schneidflächenwinkel (α) aufweist, der kleiner ist als ein Schneidflächenwinkel (β), den die jeweils zweite Schneidfläche (13, 14) aufweist, welche an die jeweils obere Schneidfläche (11, 12) anschließt und wobei die jeweils zweite Schneidkante (15, 16) im Betrieb wie ein sich auf einer Kreisbahn drehender Meißel wirkt.

2. Bohrwerkzeug (1) nach einem der vorhergehenden Ansprüche, **dadurch gekennzeichnet, dass** das Bohrwerkzeug (1) die eine unter Vermeidung der Ausbildung einer Querschneide gebildete Spitze (6) aufweist.

3. Bohrwerkzeug (1) nach einem der vorhergehenden Ansprüche, **dadurch gekennzeichnet, dass** der Schneidkörper (5) einen dachförmig ausgebildeten, Spanflächen (9, 10) und Freiflächen (17, 18) aufweisenden, zentrischen Bereich (27) umfasst, der seitlich von zwei in Wirkrichtung (x) des Bohrwerkzeugs (1) zurückversetzten Außenbereich (28) begrenzt ist.

4. Bohrwerkzeug (1) nach einem der vorhergehenden Ansprüche, **dadurch gekennzeichnet, dass** die zweite Schneidkante (15, 16) einen Spitzenwinkel (γ) mit einer Winkelhalbierenden (b) aufweist, welche zu einer Längsmittelachse (a) des Bohrwerkzeugs (1) einen Winkel (ε) von etwa 20° bis 70° aufweist.

5. Bohrwerkzeug (1) nach einem der vorhergehenden Ansprüche, **dadurch gekennzeichnet, dass** zwei Schneidkanten (7, 8) in der Spitze (6) geradlinig ineinander übergehen.

6. Bohrwerkzeug (1) nach einem der vorhergehenden Ansprüche, **dadurch gekennzeichnet, dass** die zweite Schneidkante (15, 16) parallel zur ersten Schneidkante (7, 8) verläuft.

7. Bohrwerkzeug (1) nach einem der vorhergehenden Ansprüche, **dadurch gekennzeichnet, dass** die zweite Schneidkante (15, 16) unter einem Winkel (K1,K2,K3,K4) zur ersten Schneidkante (7, 8) verläuft.

8. Bohrwerkzeug (1) nach einem der vorhergehenden Ansprüche, **dadurch gekennzeichnet, dass** die Schneidplatte (5) zur Seite hin durch Seitenflächen (19 bis 22) gebildet ist.

9. Bohrwerkzeug (1) nach Anspruch 8, **dadurch gekennzeichnet, dass** sich die Seitenflächen (19 bis 22) etwa parallel gegenüberliegen.

10. Bohrwerkzeug (1) nach Anspruch 8 oder 9, **dadurch gekennzeichnet, dass** die zweite Schneidkante (15) bis zur Seitenfläche (22) verläuft und die Schneidekante (7) annähernd auf der gesamten Länge unterstützt.

11. Bohrwerkzeug (1) nach einem der Ansprüche 8 bis 10, **dadurch gekennzeichnet, dass** die Seitenflächen (19, 21) in einem oberen Bereich A der Schneidplatte (5) begrenzt durch die Schneidflächen (13, 14) bzw. die Freiflächen (17, 18) einen Giebel ausbilden.

12. Bohrwerkzeug (1) nach einem der vorhergehenden Ansprüche, **dadurch gekennzeichnet, dass** die Schneidkanten (7, 8), ausgehend von der Spitze (6), zunächst in einem zentrischen Bereich (27) der Schneidplatte (5) verlaufen und von diesem dann bogenförmig in Außenbereiche (28) der Schneidplatte (5) übergehen.

13. Bohrwerkzeug (1) nach Anspruch 12, **dadurch gekennzeichnet, dass** die Außenbereiche (28) in Richtung einer Längsmittelachse (a) der Schneidplatte (5) gegenüber dem zentrischen Bereich (28) zurückversetz sind.

14. Bohrwerkzeug (1) nach Anspruch 12 oder 13, **dadurch gekennzeichnet, dass** die zweite Schneidkante (15, 16) nur im zentrischen Bereich (27) verläuft.

## Claims

1. Drilling tool (1) for working concrete, rock, masonry and suchlike materials, having a tool head with a cutting body (5) which is designed as a cutting tip (5) and which has at least two front rake faces (9, 10) as seen in the direction of rotation (w), at least two rear flanks (17, 18) as seen in the direction of rotation (w) and at least two front-end cutting edges (7, 8), wherein the cutting edges (7, 8) merge directly into one another at the point (6) of the cutting tip (5), wherein the cutting edges (7, 8) each separate the rake face (9, 10) and the flank (17, 18), **characterized in that** the rake faces (9, 10) are each formed by at least two cutting faces (11, 13; 12, 14) merging into one another at at least one second cutting edge (15, 16), wherein in each case the top cutting face (11, 12) merging into the flank (17, 18) at the first cutting edge (7, 8) has a cutting-face angle (α) which is smaller than a cutting-face angle (β) of the respective second cutting face (13, 14) adjoining the respective top cutting face (11, 12) and wherein the respective second cutting edge (15, 16) acts in operation as a chisel rotating on a circular path.

2. Drilling tool (1) according to one of the preceding claims, **characterized in that** the drilling tool (1) has a point (6) which is formed while avoiding the formation of a chisel edge.

3. Drilling tool (1) according to either of the preceding claims, **characterized in that** the cutting body (5) comprises a roof-shaped central region (27) which has rake faces (9, 10) and flanks (17, 18) and which is defined laterally by two outer regions (28) set back in the effective direction (x) of the drilling tool (1).

4. Drilling tool (1) according to one of the preceding claims, **characterized in that** the second cutting edge (15, 16) has a point angle (γ) with an angle bisector (b) which has an angle (ε) of about 20° to 70° relative to a longitudinal centre axis (a) of the drilling tool (1).

5. Drilling tool (1) according to one of the preceding claims, **characterized in that** two cutting edges (7, 8) merge rectilinearly into one another at the point (6).

6. Drilling tool (1) according to one of the preceding claims, **characterized in that** the second cutting edge (15, 16) runs parallel to the first cutting edge (7, 8).

7. Drilling tool (1) according to one of the preceding claims, **characterized in that** the second cutting edge (15, 16) runs at an angle (K1, K2, K3, K4) relative to the first cutting edge (7, 8).

8. Drilling tool (1) according to one of the preceding claims, **characterized in that** the cutting tip (5) is formed to the side by side faces (19 to 22).

9. Drilling tool (1) according to Claim 8, **characterized in that** the side faces (19 to 22) are situated opposite one another approximately in parallel.

10. Drilling tool (1) according to Claim 8 or 9, **characterized in that** the second cutting edge (15) runs up to the side face (22) and supports the cutting edge (7) approximately over the entire length.

11. Drilling tool (1) according to one of Claims 8 to 10, **characterized in that** the side faces (19, 21) form a gable in a top region A of the cutting tip (5) defined by the cutting faces (13, 14) and the flanks (17, 18), respectively.

12. Drilling tool (1) according to one of the preceding claims, **characterized in that** the cutting edges (7, 8), starting from the point (6), run first of all in a central region (27) of the cutting tip (5) and then merge from this central region in a curved manner into outer regions (28) of the cutting tip (5).

13. Drilling tool (1) according to Claim 12, **characterized in that** the outer regions (28) are set back from the central region (28) in the direction of a longitudinal centre axis (a) of the cutting tip (5).

14. Drilling tool (1) according to Claim 12 or 13, **characterized in that** the second cutting edge (15, 16) runs only in the central region (27).

## Revendications

1. Foret (1) pour le traitement de béton, de roche, de maçonnerie ou de matériaux similaires, avec une tête d'outil avec un corps de coupe (5) réalisé en forme de plaquette de coupe (5), qui présente au moins deux faces de coupe avant (9, 10) dans le sens de rotation (w), au moins deux faces de dégagement arrière (17, 18) dans le sens de rotation (w) et au moins deux arêtes de coupe frontales (7, 8), dans lequel les arêtes de coupe (7, 8) se prolongent directement l'une dans l'autre dans la pointe (6) de la plaquette de coupe (5), dans lequel les arêtes de coupe (7, 8) séparent respectivement la face de coupe (9, 10) de la face de dégagement (17, 18), **caractérisé en ce que** les faces de coupe (9, 10) sont formées respectivement par au moins deux faces de coupe (11, 13; 12, 14) se prolongeant l'une dans l'autre à au moins une deuxième arête de coupe (15, 16), dans lequel la face de coupe supérieure (11, 12) se prolongeant respectivement dans la face de dégagement (17, 18) à la première arête de coupe (7, 8) présente un angle de face de coupe (α) qui est plus petit qu'un angle de face de coupe (β), que présente respectivement la deuxième face de coupe (13, 14), qui se raccorde à la face de coupe respectivement supérieure (11, 12) et dans lequel chaque deuxième arête de coupe (15, 16) agit en fonctionnement comme un burin tournant sur une trajectoire circulaire.

2. Foret (1) selon l'une quelconque des revendications précédentes, **caractérisé en ce que** le foret (1) présente ladite une pointe (6) formée en évitant la formation d'un tranchant transversal.

3. Foret (1) selon l'une quelconque des revendications précédentes, **caractérisé en ce que** le corps de coupe (5) comprend une région centrale (27), présentant des faces de coupe (9, 10) et des faces de dégagement (17, 18), et réalisée en forme de toit, qui est limitée latéralement par deux régions extérieures (28) situées en retrait dans la direction d'action (x) du foret (1).

4. Foret (1) selon l'une quelconque des revendications précédentes, **caractérisé en ce que** la deuxième arête de coupe (15, 16) présente un angle de pointe (γ) avec une bissectrice (b), qui présente un angle (ε) d'environ 20° à 70° avec un axe central longitudinal (a) du foret (1).

5. Foret (1) selon l'une quelconque des revendications précédentes, **caractérisé en ce que** deux arêtes de coupe (7, 8) se prolongent l'une dans l'autre en ligne droite dans la pointe (6).

6. Foret (1) selon l'une quelconque des revendications précédentes, **caractérisé en ce que** la deuxième arête de coupe (15, 16) est parallèle à la première arête de coupe (7, 8).

7. Foret (1) selon l'une quelconque des revendications précédentes, **caractérisé en ce que** la deuxième arête de coupe (15, 16) s'étend sous un angle (K1, K2, K3, K4) par rapport à la première arête de coupe (7, 8).

8. Foret (1) selon l'une quelconque des revendications précédentes, **caractérisé en ce que** la plaquette de coupe (5) est formée en direction du côté par des faces latérales (19 à 22).

9. Foret (1) selon la revendication 8, **caractérisé en ce que** les faces latérales (19 à 22) se font face parallèlement.

10. Foret (1) selon la revendication 8 ou 9, **caractérisé en ce que** la deuxième arête de coupe (15) s'étend jusqu'à la face latérale (22) et soutient l'arête de coupe (7) approximativement sur toute la longueur.

11. Foret (1) selon l'une quelconque des revendications 8 à 10, **caractérisé en ce que** les faces latérales (19, 21) forment un pignon dans une région supérieure A de la plaquette de coupe (5) limitée par les faces de coupe (13, 14) ou les faces de dégagement (17, 18).

12. Foret (1) selon l'une quelconque des revendications précédentes, **caractérisé en ce que** les arêtes de coupe (7, 8) s'étendent, à partir de la pointe (6), d'abord dans une région centrale (27) de la plaquette de coupe (5) et se prolongent ensuite à partir de celle-ci en forme d'arc dans des régions extérieures (28) de la plaquette de coupe (5).

13. Foret (1) selon la revendication 12, **caractérisé en ce que** les régions extérieures (28) sont situées en retrait par rapport à la région centrale (28) dans la direction d'un axe central longitudinal (a) de la plaquette de coupe (5).

14. Foret (1) selon la revendication 12 ou 13, **caractérisé en ce que** la deuxième arête de coupe (15, 16) ne s'étend que dans la région centrale (27).
